# EUROPEAN PATENT SPECIFICATION

(11) **EP 4 694 247 B1**
(45) Date of publication and mention of the grant of the patent: **18.11.2026**
(21) Application number: 24193635.0
(22) Date of filing: 08.08.2024
(51) Int. Cl.: H04W 8/24, H04W 60/00, H04W 88/06

(54) **NAS MODE SELECTION**
NAS-MODUSAUSWAHL
SÉLECTION DE MODE NAS

(43) Date of publication of application: 11.02.2026
(73) Proprietor: Deutsche Telekom AG, 53113 Bonn (DE)
(72) Inventor: COLOM IKUNO, Josep, 2100 Korneuburg (AT)
(74) Representative: 2SPL Patentanwälte PartG mbB

(56) References cited:
- EP-B1- 3 484 200
- WO-A1-2019/034021
- CN-A- 109 548 136

## Description

### Field

Examples relate to methods, computer programs, and apparatuses for user equipment, UE, a network entity, for a base station, and for a mobile communication system, more particularly, but not exclusively, to a concept for using non-access stratum, NAS, capabilities of a UE in a mobile communication system for efficient NAS mode selection and NAS signaling.

### Background

In mobile communication systems, such as 3GPP (3^{rd} Generation partnership Project) network, the terms "non-access stratum" (NAS) and "access stratum" (AS) refer to different layers of network protocol functions. The access stratum (AS) is responsible for all the functions related to the physical connection between the user equipment (UE) and the network. This includes tasks such as managing the radio link, handovers, and ensuring the quality of service. The AS operates within the radio access network (RAN) and encompasses the lower layers of the protocol stack, including the physical layer (Layer 1), the data link layer (Layer 2), and parts of the network layer (Layer 3). These layers handle the establishment, maintenance, and termination of the radio connection, as well as the transmission of data over the radio interface.

On the other hand, the non-access stratum (NAS) operates above the access stratum and is responsible for signaling and control functions that are not directly related to the radio interface. NAS functions include mobility management, session management, and the handling of security and authentication. NAS operates between the UE and the core network (CN), enabling tasks such as registering the UE with the network, establishing and maintaining IP (internet protocol) connectivity, and managing the user's mobility as they move between different cells or even different network types (e.g., from 4G (4^{th} Generation) to 5G). NAS ensures that the higher-layer services and applications can function seamlessly, regardless of the underlying radio technology or the specifics of the radio connection managed by the access stratum.

Document CN 109 548 136 A discloses a non-access stratum signaling transmission method for a user terminal. The method comprises establishing an RRC connection with the base station and, in the RRC connection, sending uplink 5G NAS signaling and uplink 4G NAS signaling to the base station. The method further comprises receiving downlink 4G NAS signaling and downlink 5G NAS signaling sent by the base station, where the downlink 4G NAS signaling is generated by the 4G core network according to the uplink 4G NAS and sent to the base station, the downlink 5G NAS signaling is generated by the 5G core network according to the uplink 5G NAS signaling and sent to the base station. Document EP 3 484 200 B1 describes a communication method performed by user equipment of a radio communication system including the user equipment, a base station, and a core network apparatus. The communication method comprises receiving information indicating one or more types of NAS protocols supported by the core network apparatus from the base station; selecting a type of a NAS protocol to be transmitted to the core network apparatus based on the information indicating the received type of the NAS protocol; and transmitting a NAS message of the selected type of the NAS protocol to the core network apparatus, wherein the user equipment supports both an LTE NAS protocol and a 5G NAS protocol.

### Summary

The invention is defined by the independent claims. Further embodiments of the invention are according to the dependent claims.

It is a finding of the present disclosure that over the development of different generations of mobile communication system the NAS signaling has changed and further changes are to be expected. While in past generations, a NAS protocol context has been established between the UE and a central entity in a core network, such as a mobility management entity (MME in 4G), Access and Mobility management Function (AMF in 5G). It is expected that in future generations of mobile communication systems, a disaggregated or distributed implementation or mode will be used, as the NAS signaling may address a plurality functionalities, which are also implemented in a distributed fashion throughout the network. It is additionally expected that in future generations of mobile communication systems, NAS incorporates aspects of service-based architecture (SBA), such as independently addressable endpoints, network services, service exposure, communication based on application program interfaces (APIs). It is a further finding that in this respect, backward compatibility and also signaling efficiency should be considered. To enable efficient selection of an appropriate NAS mode (e.g. disaggregated NAS or NAS non-disaggregated NAS), NAS capabilities are provided by UEs so the network can decide on or select a NAS mode to be used.

Examples therefore provide a method for a UE of a mobile communication system. The UE supports two or more NAS modes. The method comprises providing NAS capability information, indicating the support of the two or more NAS modes, to a network entity of the mobile communication system and receiving an indication on which NAS mode to use in response to the NAS capability information. Therewith examples enable the network entity to choose or select among the NAS modes supported by the UE.

For example, the providing of the NAS capability information is part of a UE network registration process. The network can then decide on the NAS mode to use from the registration on. For example, the NAS capability information may comprise one or more elements of the group of support for 5th generation, 5G, NAS mode of operation, support for 6G NAS mode of operation, support for service-based NAS mode of operation, support for legacy NAS mode of operation, a preference for a specific mode of operation, a list of preferred modes of operation, services/functionality, for which service-based NAS is supported, especially related to functionality provided by an access and mobility management function, AMF, a session management function, SMF, a policy control function, PCF, a short message service function, SMSF and/or a gateway mobile location center, GLMC, version or versions, especially application programming interfaces, API, version(s), supported. Examples may therewith enable an improved or optimized decision on a NAS mode to use.

In some examples the receiving of the indication may comprise receiving a NAS message using the respective NAS mode. The indication may hence be implicit as upon provision of the NAS capability information the UE may just receive a NAS message using one of the modes indicated in the capability information. Signaling and/or control overhead may be reduced using implicit signaling. In further examples the receiving of the indication may comprise receiving a NAS mode response indication or message. That way, the UE may setup a NAS context in line with the indication or message. The NAS mode response message may indicate a chosen NAS mode of operation, especially including at least one element of the group of a legacy NAS indication, a service-based NAS indication, and a version or versions, especially API (application programming interface) version(s), the network supports. That way an efficient NAS mode alignment may be achieved between the network and the UE. The method may further comprise establishing a NAS connection with a network NAS entity using the indicated NAS mode. Examples may therewith provide an efficient NAS mode configuration and context establishment procedure.

Examples also provide a method for a network entity of a mobile communication system. The mobile communication system is configured to service a UE supporting two or more NAS modes. The method comprises obtaining NAS capability information from the UE, the NAS capability information indicating the support of the two or more NAS modes. The method further comprises determining a NAS mode for the UE to use and transmitting an indication on the NAS mode to use in response to the NAS capability information. The network entity may hence also enable efficient NAS mode selection. In some examples, the determining of the NAS mode comprises aligning NAS capability information of the UE and/or the network entity with another network entity. Hence, if multiple network entities or nodes are involved, examples may enable alignment of NAS mode selection throughout the chain of involved network entities or nodes. For example, the other network entity is from another network, especially a home network of the UE, the other network entity may be required to service the UE, the UE may be associated to the other network entity, and/or the other network entity may comprise subscriber information related to the UE. Examples may hence also enable NAS mode selection in a roaming scenario involving multiple entities.

At least in some examples the method may further comprise receiving from a base station of the mobile communication system NAS capability information. Even if both UE and CN would support a specific NAS mode, if the base station is not capable of correctly forwarding the NAS messages, NAS connectivity will not be possible. This is especially true in the case of disaggregated NAS, where the base station is required to forward NAS messages from a given UE to more than one CN entity, as opposed to the case in past generations, where a single NAS termination point exists in the CN. The determining of the NAS mode may be further based on the NAS capability information of the base station. That way, base station NAS capabilities can also be considered in the NAS mode alignment procedure.

Examples also provide a method for a base station of a mobile communication system. The base station supports two or more NAS modes. The method comprises providing NAS capability information indicating the support of the two or more NAS modes to a network entity of the mobile communication system and receiving an indication on which NAS mode to use in response to the NAS capability information. That way, the NAS support at the base station can be aligned. In further examples the method for the base station may comprise transmitting the NAS capability information or a further indication about the NAS mode to use to a UE of the mobile communication system. Hence the base station may support and/or participate in the process of indicating the NAS mode to use to the UE, thereby enabling an efficient signaling chain.

In some examples, a further network may be required for serving the UE. Such a case comprising a roaming situation, wherein a home public land mobile network (HPLMN) is required besides the visited public land mobile network (VPLMN) to serve the UE. In this case, the determining of the NAS mode may be further based on the NAS capability information of the further network. That way, the NAS capabilities of multiple networks can also be considered in the NAS mode alignment procedure. A further example is a computer program having a program code for performing one of the methods described herein, when the computer program is executed on a computer, a processor, or a programmable hardware component. Another example is an apparatus for supporting two or more NAS modes in a mobile communication system. The apparatus comprises one or more interfaces configured to communicate in the mobile communication system and one or more processing devices configured to perform one of the methods described herein. A further example is a UE comprising such an apparatus, which is configured to perform one of the methods for the UE as described herein. Another example is a network entity comprising such an apparatus, which is configured to perform one of the methods for the network entity as described herein. Yet another example is a base station comprising such an apparatus, which is configured to perform one of the methods for the base station as described herein. Yet another example is a mobile communication system comprising an example of the apparatus.

A communication system is another example comprising user equipment with an example of an apparatus as described above, one or more access networks and a core network node with example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for a UE;
Fig. 2 illustrates a block diagram of an example of a method for a network entity;
Fig. 3 depicts a block diagram of an example of a method for a base station;
Fig. 4 shows block diagrams of examples of apparatuses for a UE, a network entity and a base station;
Fig. 5 illustrates a system architecture of a 5G system and data transmission between a UE and a data network;
Fig. 6 illustrates a system architecture in a roaming case;
Fig. 7 depicts a disaggregated NAS in an example;
Fig. 8 shows a disaggregated UE in an example;
Fig. 9 illustrates mixed NAS mode of operation and backwards compatibility in an example;
Fig. 10 depicts a message sequence chart of a UE registration;
Fig. 11 shows a message flow applied to independent NAS security contexts between a UE and different CP entities in an example; and
Fig. 12 shows a message flow between a base station and a network entity in an example.

### Detailed Description

Some examples are now described in more detail with reference to the enclosed figures. However, other possible examples are not limited to the features of these examples described in detail. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

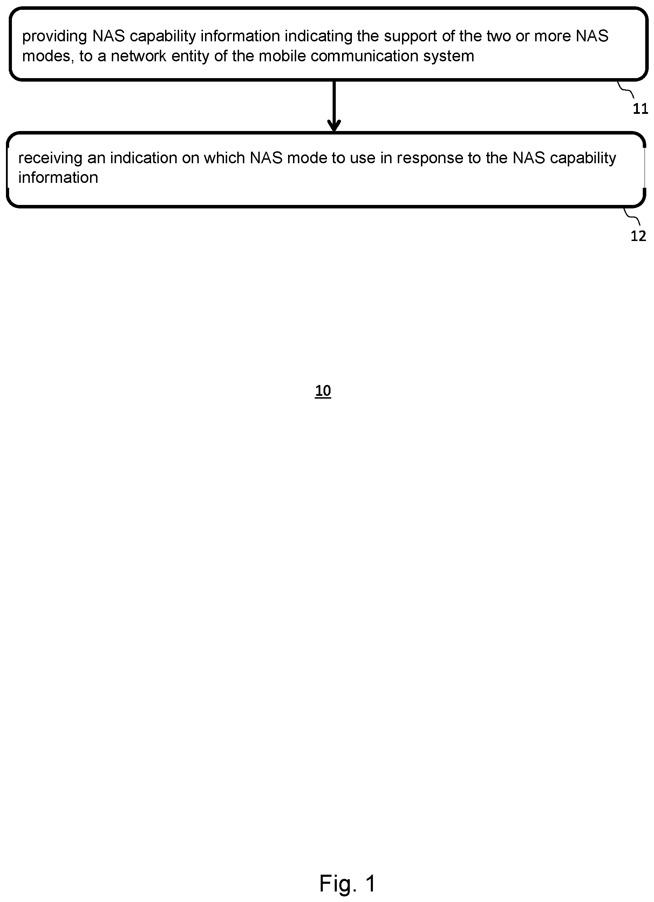

Fig. 1 shows a block diagram of an example of a method 10 for a UE of a mobile communication system. The UE supports two or more NAS modes. The method 10 comprises providing 11 NAS capability information indicating the support of the two or more NAS modes, to a network entity of the mobile communication system. The method 10 also comprises receiving 12 an indication on which NAS mode to use in response to the NAS capability information. Examples hence enable a UE to provide information about the NAS modes supported by the UE (NAS capability information) to a network entity.

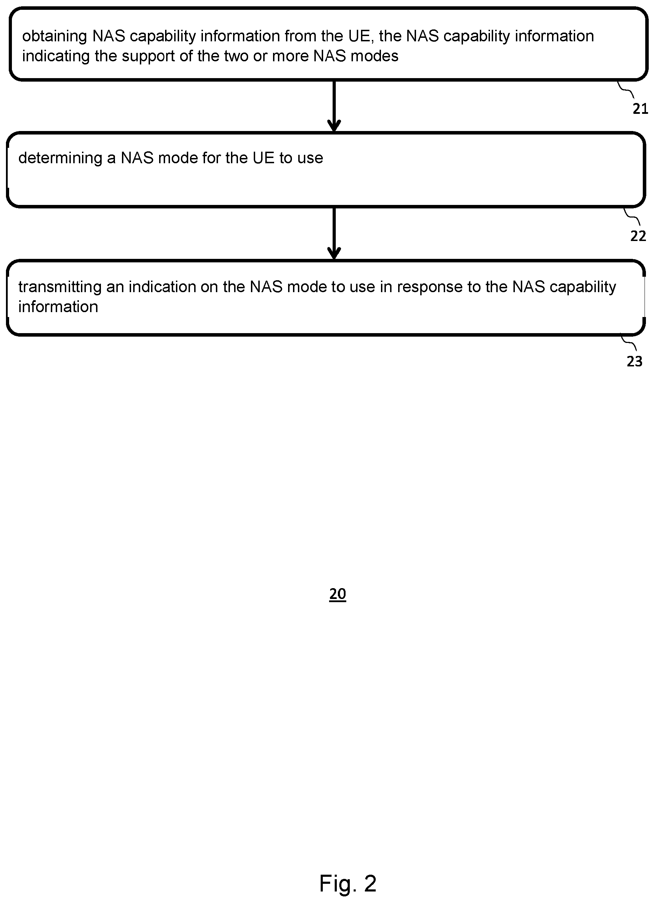

Fig. 2 illustrates a block diagram of an example of a respective method 20 for a network entity of the mobile communication system. The mobile communication system is configured to service the UE supporting the two or more NAS modes. The method 20 comprises obtaining 21 NAS capability information from the UE. The NAS capability information indicates the support of the two or more NAS modes. The method 20 further comprises determining 22 a NAS mode for the UE to use and transmitting 23 an indication on the NAS mode to use in response to the NAS capability information. The network entity can therewith select an appropriate or even optimized NAS mode to use.

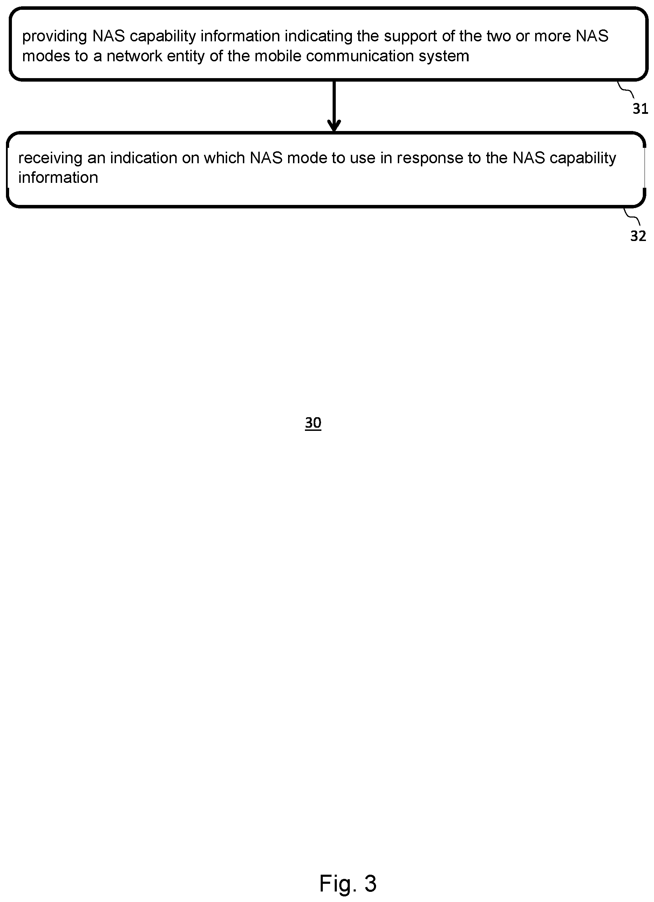

Fig. 3 depicts a block diagram of an example of a method 30 for a base station of the mobile communication system. The base station supports two or more non-access stratum, NAS, modes. The method 30 comprises providing 31 NAS capability information indicating the support of the two or more NAS modes to a network entity of the mobile communication system. The method 30 further comprises receiving 32 an indication on which NAS mode to use in response to the NAS capability information. Examples may also involve RAN nodes (e.g. base stations) in a NAS mode alignment process which comprises obtaining NAS capability information of the involved entities, selecting an appropriate NAS mode, and information the involved entities about the selection.

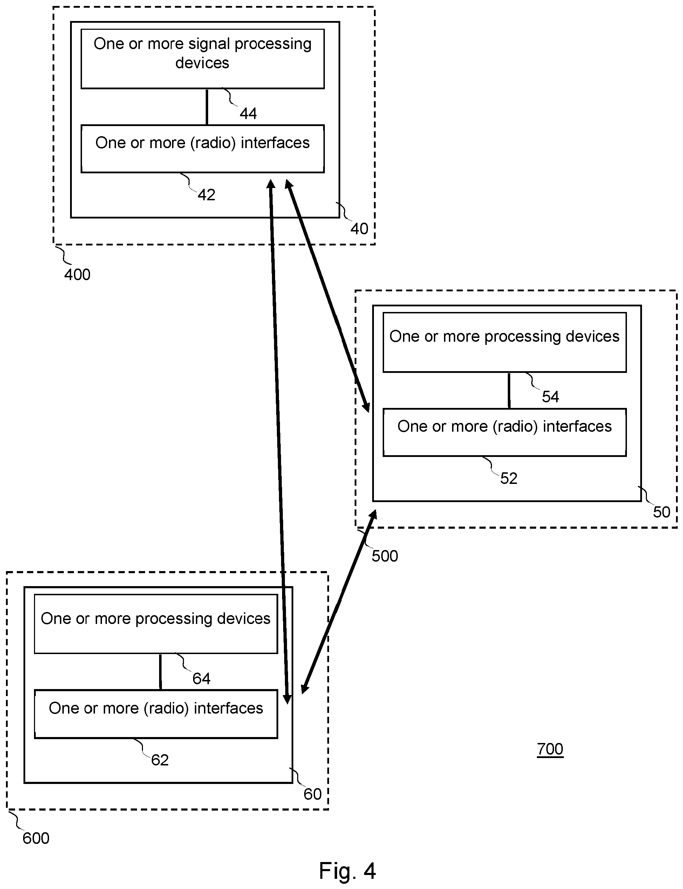

Fig. 4 shows block diagrams of examples of apparatuses 40, 50, 60 for a UE 400, a network entity 600 and a base station 500 in a mobile communication system 700. All shown apparatuses 40, 50, 60 comprise one or more interfaces 42, 52, 62 configured to communicate in the mobile communication system 700. The one or more interfaces 42, 52, 62 are coupled to one or more processing devices 44, 54, 64. The one or more processing devices 44, 54, 64 are configured to perform one of the methods 10, 20, 30 as described herein. The one or more processing devices 44 of the apparatus 40 for the UE 400 are configured to perform the methods 10 for the UE as described herein. The one or more processing devices 64 of the apparatus 60 for the network entity 600 are configured to perform the methods 20 for the network entity as described herein. The one or more processing devices 54 of the apparatus 50 for the base station 500 are configured to perform the methods 30 for the base station as described herein.

Fig. 4 further illustrates an example of a communication system 700 comprising the UE 400 and the network entity 600, the base station 500, respectively. The examples of the UE 400, the network entity 600 and the base station 500 are shown in broken lines as they are optional from the perspective of the apparatuses 40, 50, and 60.

As illustrated in Fig. 4, the respective one or more processing devices 44, 54, 64 are coupled to the one or more interfaces 42, 52, 62. The one or more interfaces 42, 52, 62 may correspond to one or more inputs and/or outputs for receiving and/or transmitting information, which may be in digital (bit) values according to a specified code or protocol, within a module, between modules or between modules of different entities. For example, an interface 42, 52, 62 may comprise interface circuitry configured to receive and/or transmit information. In examples an interface 42, 52, 62 may correspond to any means for obtaining, receiving, transmitting or providing analog or digital signals or information, e.g., any connector, contact, pin, register, input port, output port, conductor, lane, etc., which allows providing or obtaining a signal or information. An interface 42, 52, 62 may be configured to communicate (transmit, receive, or both) in a wireless or wireline manner and it may be configured to communicate, i.e., transmit and/or receive signals, information with further internal or external components. The one or more interfaces 42, 52, 62 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 44, 54, 64 may be implemented using one or more processing units, one or more circuitries, any means for processing, such as a processor, a computer or a programmable hardware component being operable with accordingly adapted software. In other words, the described function of the one or more processing devices 44, 54, 64 may as well be implemented in software, which is then executed on one or more programmable hardware components. Such hardware components may comprise a general-purpose processor, a Digital Signal Processor (DSP), a microcontroller, etc.

In examples a network entity or node may be any network node in a radio access network (RAN) or core network (CN). For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device, e.g. a base station or access point. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The mobile communication system 700 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, etc. A wireless communication device, e.g. the UE can be registered or associated with at least one cell (e.g., the network entity), e.g., it can be associated to a cell such that data can be exchanged between the network and the mobile in the coverage area of the associated cell using a dedicated channel, connection or link.

In general, the UE may be a communication device that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in a vehicle, a car, a bus, a truck, a construction and/or agricultural machinery, a train, an airplane, a boat, a ship, a cruise ship, an Internet of Things (IoT) device, a logistics application, etc.

For example, the communication device and the network entity may be configured to communicate in a cellular mobile communication system. Accordingly, the communication device and the network entity may be configured to communicate in a cellular mobile communication system, for example, in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Further network entities or nodes are those comprised in a core network of the mobile communication system 700, as will be outlined in more details subsequently. Examples provide a method for support of heterogenous QoS deployments in mobile networks.

Examples may enable simultaneous support of multiple NAS modes in a mobile communication system 700. For example, simultaneous support in 6G networks for UEs using the legacy NAS approach (all NAS communication terminated at one NF (network function)) and a disaggregated NAS approach may be enabled. An exchange of capability indication may be performed, such that a NAS path supported by all network elements, especially in the case of roaming, can be established.

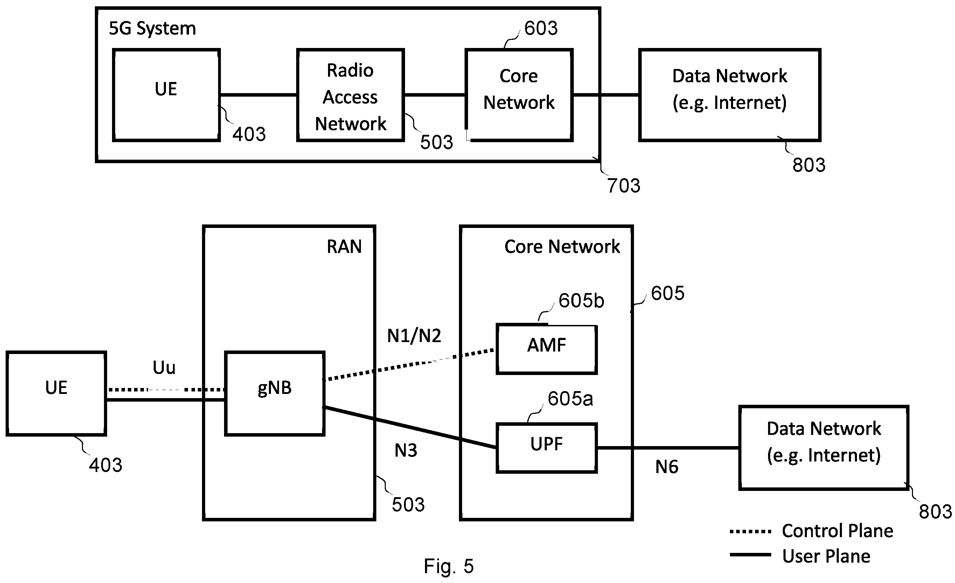

A general architecture of mobile networks will be described in the following. A current paradigm divides the mobile network in two main parts: Access Network (AN) and Core Network (CN). Fig. 5 illustrates a system architecture of a 5G system and data transmission between a UE 403 and a data network 803. At the top Fig. 5 illustrates the current paradigm in which a 5G system 703 comprises (from left to right) a UE 403, a RAN 503, a CN 605 and a data network (DN) 803, which represent a general architecture of mobile networks. The objective is to provide the UE 403 with connectivity towards the DN 803. Going in more detail, the UE 403 communicates with the RAN 503 via a radio interface, which is used for conveying both signaling information and data traffic. Even if there is a logical separation (logical channels), for obvious reasons both types of data end up being transmitted over the same physical medium.

Between the RAN 503 and the CN 603, signaling information and user data are separated in different interfaces: N1/N2 and N3 in the 5G case, the former running on a SCTP (Stream Control Transmission Protocol)/NG-AP (Next Generation Application Protocol)/NAS (Non Access Stratum) protocol stack and the latter running on a UDP (Universal Datagram Protocol)/GTP-U (GPRS (General Packet Radio Service) Tunneling Protocol - User Plane) protocol stack. Fig. 5 illustrates data transmission between UE 403 and Data Network 803. To establish a data connection enabling the UE 403 to communicate with the DN 803, a PDU (Packet Data Unit) session is required. A PDU session is a logical data transport channel terminated at the CN 605 that provides connectivity to the DN 803. The termination point of a given PDU session (UPF (User Plane Function) 605a at the bottom in Fig. 5) is termed PDU Session Anchor (PSA). The Access and Mobility Management Function 605b (AMF) terminates the control plane as shown at the bottom of Fig. 5.

Control plane (CP) signaling between the UE 403 and the CN 603/605, the (R)AN 503, respectively, is based on the NAS protocol. While the NAS protocol is typically defined as "terminated at the AMF", there are some nuances to this statement and NAS protocol containers may actually be exchanged with entities beyond the AMF.

The NAS protocol for 4G/EPC (TS 24.301, https://www.3gpp.org/ftp/Specs/archive/24_series/24.301/24301-i70.zip) was reused and extended. NAS exchanges standard L3 messages (TS 24.007, https://www.3gpp.org/ftp/Specs/archive/24_series/24.007/24007-i20.zip). 5G-NAS (TS 24.501, https://www.3gpp.org/ftp/Specs/archive/24_series/24.501/24501-i70.zip) is an evolution of 4G-NAS and also defines the information element coding in the specification. The path chosen for 5G was to terminate NAS security at a common point and disaggregate the MME functionality.
- AMF terminates NAS security for all NAS of a UE and processes Mobility Management (MM).
- For other functions, it forwards NAS payloads over SBI (Service Based Interface) to other NFs.
   ∘ SMF (Session Management Function) for Session Management (SM).
   ∘ SMSF (Short Message Service Function) for SMS (Short Message Service).
   ∘ PCF (Policy Control Function) for policy.
   ∘ GMLC (Gateway Mobile Location Centre) for location.

SBI refers to Service Based Interface and uses the Service Based Architecture (SBA) 5GC (5G core) Control Plane (CP) architecture. SBIs use a newly-defined protocol stack. Instead of GTP-C (GPRS Tunneling Protocol Control plane), it is now based on HTTP/2 (Hypertext Transfer Protocol 2, more binary & more performant than HTTP/1). NAS information is transported in SBI messages by including the NAS binary container as MIME (Multipurpose Internet Mail Extensions) multipart together with a JSON (JavaScript Object Notation) body.

In a service-based interface protocol stack in an example the lower layers can be assumed to be TCP/IP/L2 (Transmission Control Protocol/Interpret Protocol/ Layer 2). TCP is used as transport layer for the CP via TCP/IP. There may be optional Transport Layer Security (TLS). SBI is operated via HTTP/2. At the application layer data is typically serialized in JSON and sometimes transparent transport of binary containers may be used.

An evolution from 4G-NAS resulted in 5G-NAS. The 4G-NAS protocol stack may provide end-to-end NAS encryption. At the UE the NAS messages use RRC (Radio Resource Control), PDCP (Packet Data convergence Protocol), RLC (Radio Link Control), MAC (Medium access control) and layer 1 (LTE physical layer ) to communicate via the LTE-Uu (LTE-Air interface) with the eNodeB, which uses the complementary protocol stack before relaying to protocols for communication with the MME (Mobility Management Entity) via the S1-MME interface. The protocols of this side are S1-AP (S1 Application Protocol), SCTP (Stream Control Transmission Protocol), IP and protocols of layers 1 and 2.

In the 5G NAS protocols encrypted NAS payload is communicated via a protocol context between the UE and AMF using lower layers and NAS-MM (Mobility Management). The protocol is terminated at the AMF, which forwards the plain NAS payload via SBI to the respective NFs, NAS-SM (Session Management) at SMF, SMS at SMSF, UE policy at PCF and LCS (Location Services) at GMLC.

This results in a dependency of internal CN components (SMF, SMSF, PCF, GMLC) to the binary encoding of the NAS protocol used between UE and AMF for the following scenarios:
Nsmf (TS 29.502, https://www.3gpp.org/ftp/Specs/archive/29_series/29.502/29502-i70.zip):
   - Create/Update/Release SM context, Create/Update Request,
   - Between AMF and (V-)SMF (N11) (Visited-SMF),
   - Between V-SMF and H-SMF (Home-SMF, Roaming),
   - Between SMF and I-SMF (Interworking SMF).
Namf (TS 29.518, https://www.3gpp.org/ftp/Specs/arhive/29_series/29.518/29518-i60.zip):
   - Send NAS payload to UE via Namf_Communication Service API,
   - Main service operation is N1N2MessateTransfer,
   - N1/N2 Message Transfer/Notify,
   - UE Context Creation/Transfer,
   - Send UE policy to UE.
Nsmsf (TS 29.540, https://www.3gpp.org/ftp/Specs/archive/29_series/29.540/29540-i40.zip):
   - Transfer of opaque SMS payload (e.g. SMS msg, CP Ack),
   - UplinkSMS service operation.
Nlmc (TS 29.572, https://www.3gpp.org/ftp/Specs/archive/29_series/29.572/29572-i60.zip):
   - Determine UE Location request.

Thus, protocol-wise, when establishing a PDU session while in roaming, there is NAS protocol data that traverses the PLMN (Public Land Mobile Network) boundary (the SEPP (Security Edge Protection Proxy) between PLMNs is excluded for clarity), with the V-SMF including a NAS binary container in the HTTP service operation PDU session establishment between V-SMF and H-SMF.

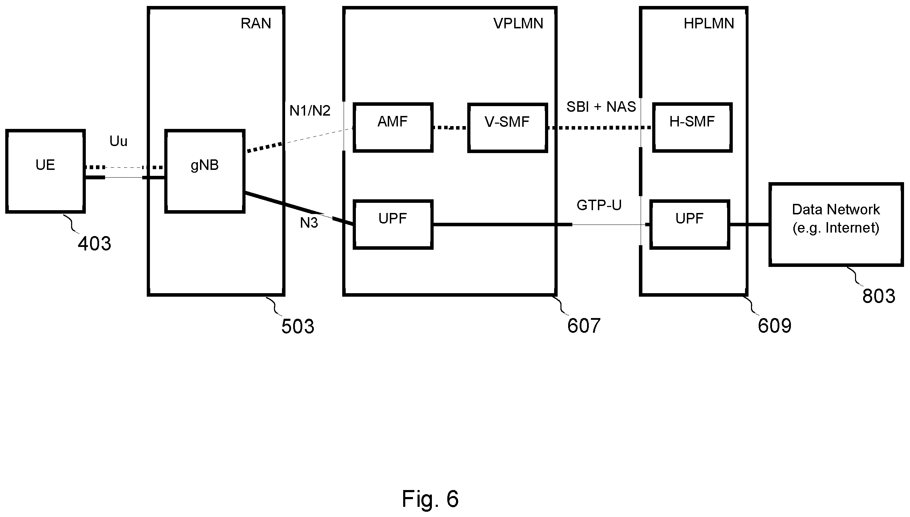

Fig. 6 illustrates a system architecture in a roaming case. The UE 403 connects to the RAN 603 via the Uu interface. The user plane uses N3 to the UPF of the V-PLMN 607 and then GTP-U to the UPF of the H-PLMN 609 before connecting to the DN 803 (via N6). The CP uses N1/N2 to the AMF and V-SMF of the V-PLMN 607 and the SBI and NAS to the H-SMF of the H-PLMN 609.

One of the optimizations that has the potential to be implemented in 6G is that of a disaggregation of the AMF. That is, that the UE is capable of directly communicating with CP elements without the AMF terminating the NAS protocol security for all NAS message types. For that, a UE would need to establish multiple security contexts, among other issues.

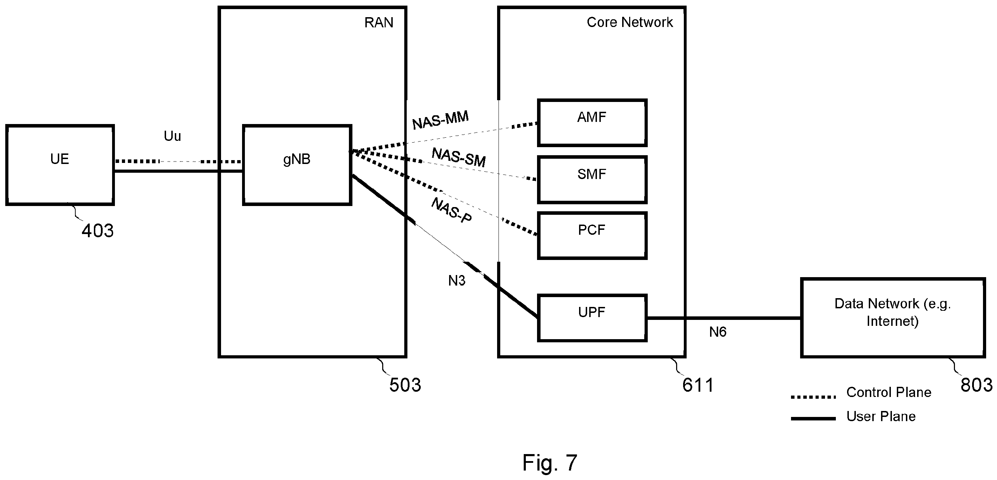

Fig. 7 depicts a disaggregated NAS in an example. Fig. 7 shows that at the RAN 503 the CP splits up into NAS-MM to the AMF at the CN 611, NAS-SM to the SMF at the CN 611, and to NAS-P (Policy) to the PCF at the CN 611.

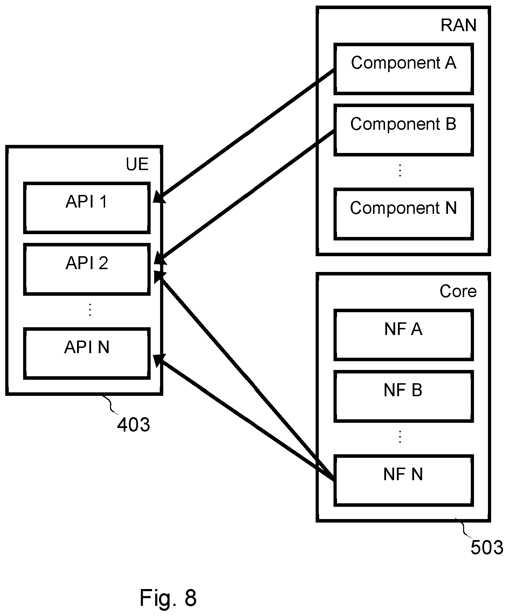

One alternative (and complementary) approach is that of disaggregating the UE. In this case, the UE's architecture is split up, such that it is composed of independent service, analogous to NF services. Fig. 8 shows a disaggregated UE in an example. At the UE 403 the services are split into APIs (Application Programming Interfaces) 1 to N with corresponding components and NFs at the RAN 503.

A switch to a disaggregated NAS on network side and/or a Service-based UE would enable more flexible deployments in 6G. Examples cover the backwards-compatibility issues that would arise if a network would need to support both legacy and new types of UE. If the NAS protocol is reused, it is necessary to ensure that there are means to differentially service and support both legacy and new types of UE.

It is expected that the NAS interface between the UE and the CN will be enhanced for 6G. Examples of the present disclosure may enable backwards compatibility. That is, examples may avoid excluding existing devices from 6G deployments. A smooth transition to 6G may be enabled by simultaneously supporting 5G-capable devices and 6G-capable devices. Similarly, 6G-capable AN nodes (e.g. upgraded gNBs) will coexist with existing 5G-(R)AN. Analogously, a 6G Core Network (CN) should be able to at least support 5G on both directions: towards the AN and towards other operators, i.e. when acting as a VPLMN towards a HPLMN.

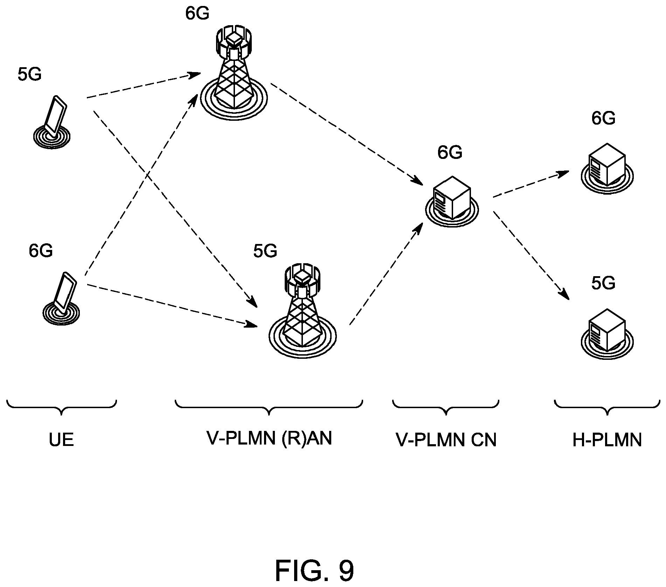

Fig. 9 illustrates mixed NAS mode of operation and backwards compatibility in an example. Fig. 9 shows two UEs on the left, a 5G UE and a 6G UE. They connect to the RAN of a V-PLMN, which comprises 5G and 6G base stations (nodeBs). The V-PLMN-RAN connects to the 6G-VPLMN-CN and on to the 5G/6G H-PLMN;

Given are:
- devices supporting 5G-NAS and/or 6G-NAS,
- network (elements) supporting 5G-NAS and/or 6G-NAS,
- (R)AN elements supporting 5G and/or 6G,
- Roaming partners supporting 5G and/or 6G,
- and especially considering the case when 6G-NAS is based on a service-based architecture, e.g. differentially-addressable services in the UE and/or direct NAS communication between the UE and different CN elements.

At least some examples may ensure that:
- It is possible to provide as broad a service as possible to mobile subscribers, be it own subscribers or roamers.
- Provide advanced capabilities when possible (e.g. 6G-based capabilities).
- Support legacy users (e.g. 5G-based) without the need of a parallel legacy infrastructure

Some examples are based on 6G UEs supporting more than one NAS mode of operation. Such that a UE would support:
- 5G-NAS: NAS as specified in TS 24.501, and
- 6G-NAS: Disaggregated, service-based NAS capable of addressing individual components in the UE and/or individual Control Plane (CP) components via different NAS security contexts.

Examples may use network registration including NAS capability indication. For example, a UE provides to the network a NAS capability indication, which contains information regarding the NAS capabilities of the UE. Considered information to be included in a NAS capability indication is as follows:

| **Information Element** | **Description** |
|---|---|
| Support for 5G-NAS mode of operation | Support for NAS as specified in 3GPP TS 24.501 (5G) |
| Support for 6G-NAS mode of operation | Support for 6G-based NAS, including, but not limited to service-based UE interactions and different security contexts/NAS channels towards different CP elements in the same network/PLMN |
| Support for Service-based NAS mode of operation | Whether the UE supports service-based addressing, IEs and/or protocols associated with service-based NAS |
| Support for Legacy NAS mode of operation | Whether other legacy NAS formats (e.g. 4G) are supported by the UE |
| a preference for a specific mode of operation(s) and/or functionalities | The preferred NAS mode of operation(s), be it a single preferred NAS mode of operation or an ordered list of preferred NAS modes of operation. |
| | In order to accommodate for non-homogeneous support across all possible NAS functionalities, the UE is allowed to state the capability per functionality. E.g. while service-based addressing on the UE may be supported for functionality related to access and mobility, it might not be supported for policy-related functionality. This refers specifically to functionality provided by an AMF, SMF, PCF, SMSF and/or GLMC, i.e. existing NFs processing NAS containers. |
| version or versions, especially API version(s), supported | For service-based communication, CP interactions are based on operations on endpoints. The most common type is that of HTTP-based APIs. In this case, it would be NAS-based APIs. Nevertheless, APIs can change over time, and versioning is/can be used to differentiate between different API versions, e.g., the SIM endpoint's address being constructed changing from nas://ue-SUPI/ /nsim-dr/v1 to nas://ue-SUPI/ /nsim-dr/v3 by indicating a "3" version number for this specific API. |

Hence, in examples the NAS capability information may comprise one or more elements of the group of
support for 5th generation, 5G, NAS mode of operation;
support for 6G NAS mode of operation;
support for service-based NAS mode of operation;
support for legacy NAS mode of operation;
a preference for a specific mode of operation;
a list of preferred modes of operation; and
services/functionality, for which service-based NAS is supported, especially related to functionality provided by an access and mobility management function, AMF, a session management function, SMF, a policy control function, PCF, a short message service function, SMSF and/or a gateway mobile location center, GLMC, version or versions, especially application programming interfaces, API, version(s), supported.

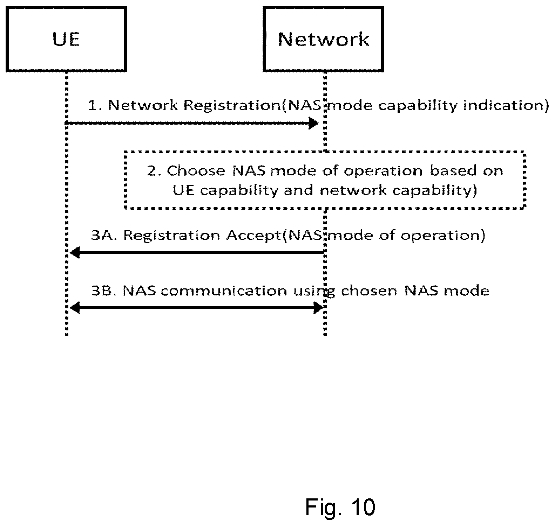

Fig. 10 depicts a message sequence chart of a UE registration. In this example the providing 11 of the NAS capability information is part of a UE network registration process.
1. In a simple form, the UE, when registering on the network (e.g. General Registration request, as in TS 23.502, clause 4.2.2.2., https://www.3gpp.org/ftp/Specs/archive/23_series/23.502/23502-j00.zip), includes the NAS mode capability indication to the network.
2. The network is configured to indicate to the UE to use a specific NAS mode based on the indication it sent and most importantly, the network's capabilities. Based on this configuration, the network decides the NAS mode to use with the UE.

An example configuration is shown below, which determines the chosen NAS mode of operation depending on UE input and for a network supporting 5G-NAS, 6G-NAS and API v3 configuration. The example NAS mode response configuration at network could be

| **UE indication** | | | **Decision** |
|---|---|---|---|
| **5G** | **6G** | **API** | |
| X | X | | 6G-NAS, API v1 |
| X | | | 5G-NAS |
| X | X | 2 | 6G-NAS v2 |
| X | X | 3 | 6G-NAS v3 |
| X | X | 4 | 6G-NAS v3 |

3A. The network sends a message to the UE indicating the NAS mode of operation to use, which is then used by the UE to communicate with the network. In examples the receiving 12 of the indication comprises receiving a NAS mode response indication or message as illustrated in Fig. 10. This example may correspond to an explicit signaling of the NAS mode to use. In other examples the receiving 12 of the indication may comprise receiving a NAS message using the respective NAS mode. That way, the signaling can be implicit, because from the NAS capability information the network selected an option and started to use it. The UE may then receive the NAS message in the corresponding format, e.g. the UE may try several formats to find the correct one.
3B. As further shown in Fig. 10 NAS communication may then take place using the selected mode. For example, the method 10 at the UE or the method 20 at the network entity may further comprise establishing a NAS connection with a network NAS entity or the UE using the indicated NAS mode.

In examples the NAS mode response message may indicate a chosen NAS mode of operation, especially including at least one element of the group of a legacy NAS indication, a service-based NAS indication, and a version or versions, especially API version(s), the network supports.

The same generic flow shown in Fig. 10 is considered for the direct NAS communication between UE-AMF and UE-SMF, that is for different NAS security contexts for Access and Mobility (AM) and Session Management (SM). The same can be considered to other NAS endpoints in the CN (PCF, SMSF, GLMC).

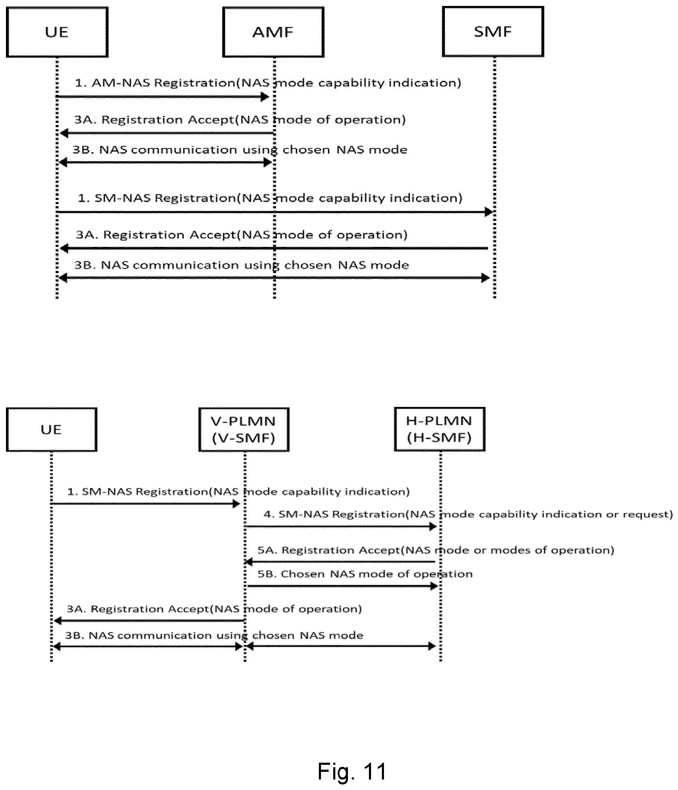

Fig. 11 shows a message flow applied to independent NAS security contexts between a UE and different CP entities in an example at the top and for a roaming scenario at the bottom. As shown in the message sequence chart at the top the UE may provide its NAS capabilities to the different NFs separately and the NFs may respond with respective NOS-mode indications to use. Generally, different NAS modes are conceivable for different NFs. Fig. 11 illustrates two subsequent NAS registrations for AMF and SMF as examples.

The roaming scenario is considered in the message sequence chart at the bottom of Fig. 11. Session Management procedures involve the exchange of NAS-encoded payloads between the V-PLMN and the H-PLMN, in the case of a 5G system between the V-SMF and the H-SMF. The objective being that of establishing a harmonized E2E (end-to-end) NAS path for NAS containers between the UE and the H-PLMN. Otherwise, there may be a mismatch between the syntax and/or functionality expected at the ends. In the method 20 for the network entity the determining 22 of the NAS Mode comprises aligning NAS capability information of the UE and/or the network entity with another network entity. For example, the other network entity may be from another network, especially a home network of the UE. The other network entity may be required to service the UE, wherein the UE is associated to the other network entity. In another example the other network entity may comprise subscriber information related to the UE.

As shown in Fig. 11 at the bottom, after the first step of SM-NAS Registration with the V-PLMN the method considers the V-PLMN:
a. Requesting the H-PLMN NAS capability information, or
b. Sending the H-PLMN NAS capability information based on its own capabilities and/or the ones of the UE in step 4. In step 5 the H-PLMN responds to the V-PLMN with
   a. A chosen NAS mode of operation, or
   b. A set of NAS modes of operation the V-PLMN can choose from. In this case, the V-PLMN replies to the H-PLMN with the chosen NAS mode of operation.

Alternatively, the NAS operation mode matching can be done based on local configuration, e.g. if included as part of the roaming SLA (Service Level Agreement) between the operators. In this case, it is performed as part of step 2 and the V-PLMN is configured with the same information.

Similarly, and given the fact that some NAS containers need to be understood by RAN nodes in order to correctly perform forwarding, in order to support different capabilities in RAN, the solution also considers a NAS mode capability indication between RAN and CN in line with the above method 30 for the base station. The method 20 for the network entity may further comprise receiving from a base station of the mobile communication system NAS capability information and the determining 22 of the NAS mode may be further based on the NAS capability information of the base station. The method 30 for the base station may further comprise transmitting the NAS capability information or a further indication about the NAS mode to use to a UE of the mobile communication system.

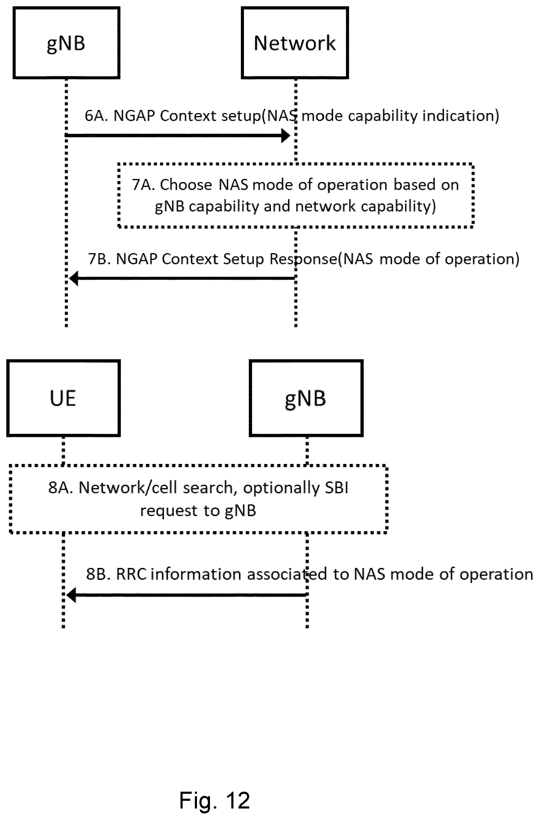

Fig. 12 shows a message flow between a base station and a network entity in an example. Fig. 12 shows application to RAN nodes with the message sequence between a gNB and the CN at the top and a message sequence between the UE and the gNB at the bottom. As shown at the top in step 6 the RAN node indicates its capability to the network. Considered messages are:
a. NG-AP Initial Context Setup, and
b. NG-AP PDU Session Resource Setup.

In step 7 the network, analogous to the case with the UE, instructs the gNB to use a specific NAS mode of operation.

To aid the UE to more effectively perform network and/or cell selection, NAS mode of operation information can additionally be sent via RRC, e.g. via SIB (System Information Block), either broadcast or on-demand triggered by a UE request. Step 8 in Fig. 12 at the bottom shows the transmission of RRC information associated to a NAS mode of operation via RRC. In this case, "associated" refers to a mapping linked to a NAS mode of operation, e.g. "class X" indicating (among other things) support for 6G-NAS and multiple NAS security contexts.

Some examples can be summarized as follows:
1. In a first step, the UE is configured to send a NAS mode capability indication related to the UE towards the network (CN node, network entity), especially as part of UE network registration request.
2. The NAS mode capability indication may include one or more of the following:
   a. Support for 5G-NAS mode of operation,
   b. Support for 6G-NAS mode of operation,
   c. Support for Service-based NAS mode of operation,
   d. Support for Legacy NAS mode of operation,
   e. a preference for a specific mode of operation,
   f. a list of preferred modes of operation,
   g. services/functionality, for which service-based NAS is supported, especially related to functionality provided by an AMF, SMF, PCF, SMSF and/or GLMC, and
   h. version or versions, especially API version(s), supported.
3. In a second step, the network is configured to decide the NAS mode of operation, especially based on the information sent by the UE and/or local configuration, especially in the roaming case and/or for a specific home operator.
4. In a third step,
   A: the network is configured to send a NAS mode capability response, especially in the registration accept message, indicating a chosen NAS mode of operation (to also cover the case where more than one mode is simultaneously chosen), especially including one of the following:
      a. Legacy NAS indication;
      b. Service-based NAS indication; and
      c. version or versions, especially API version(s) the network supports.
   And B: the UE establishing a NAS connection with one or (especially) more CN elements in the network, especially via the (R)AN, using the specified NAS mode of operation or choosing one of the available NAS modes of operation.
5. In a fourth step, the network is configured to send to a further network a NAS mode capability indication related to the NAS mode capability indication of the UE and/or of the network (the network should target the best combination that all elements (i.e. networks and UE) support) or a NAS capability request,
   a. especially with the further network being the home network of the UE,
   b. especially wherein the further network is required to provide service the UE,
   c. especially wherein the UE is associated to or the further network comprises subscriber information related to the UE.
6. In a fifth step, the further network is configured to send to the network a NAS mode capability response or a NAS capability indication related to the further network, especially based on the combination of the NAS mode capability indication in the third message and the NAS mode capabilities supported by the further network.
7. In a sixth message prior to the first message, the RAN, especially a gNB, is configured to send to the CN of the network, especially an AMF, SMF, PCF, SMSF and/or GLMC, a NAS mode capability indication related to the RAN, especially the gNB.
8. In a seventh message, the CN of the network, especially an AMF, SMF, PCF, SMSF and/or GLMC, is configured to send to the RAN, especially a gNB, a NAS mode capability response related to the CN.
9. In an eight message, the RAN, especially a gNB, is configured to send to the UE an RRC indication associated with a NAS mode capability indication, especially as MIB and/or SIB information.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (10) for a user equipment (400), UE, of a mobile communication system (700), the UE (400) supporting two or more non-access stratum, NAS, modes, the method (10) comprising
providing (11) NAS capability information indicating the support of the two or more NAS modes, to a network entity (600) of the mobile communication system (700); and
receiving (12) an indication on which NAS mode to use in response to the NAS capability information from the network entity (600).

2. The method (10) of claim 1, wherein the providing of the NAS capability information is part of a UE network registration process.

3. The method (10) of one of the claims 1 or 2, wherein the NAS capability information comprises one or more elements of the group of
support for 5^{th} generation, 5G, NAS mode of operation;
support for 6G NAS mode of operation;
support for service-based NAS mode of operation;
support for legacy NAS mode of operation;
a preference for a specific mode of operation;
a list of preferred modes of operation;
services/functionality, for which service-based NAS is supported, especially related to functionality provided by an access and mobility management function, AMF, a session management function, SMF, a policy control function, PCF, a short message service function, SMSF and/or a gateway mobile location center, GLMC, version or versions, especially application programming interfaces, API, version(s), supported.

4. The method (10) of one of the claims 1 to 3, wherein the receiving of the indication comprises receiving a NAS message using the respective NAS mode.

5. The method (10) of one of the claims 1 to 4, wherein the receiving of the indication comprises receiving a NAS mode response indication or message and further comprising establishing a NAS connection with a network NAS entity using the indicated NAS mode.

6. The method (10) of claim 5, wherein the NAS mode response message indicates a chosen NAS mode of operation, especially including at least one element of the group of
a legacy NAS indication;
a service-based NAS indication; and
a version or versions, especially application programming interface, API, version(s), the network supports.

7. A method (20) for a network entity (600) of a mobile communication system (700), the mobile communication system (700) being configured to service user equipment (400), UE, supporting two or more non-access stratum, NAS, modes, the method (20) comprising
obtaining (21) NAS capability information from the UE (400), the NAS capability information indicating the support of the two or more NAS modes;
determining (22) a NAS mode for the UE (400) to use; and
transmitting (23) an indication on the NAS mode to use in response to the NAS capability information.

8. The method (20) of claim 7, wherein the determining (22) of the NAS Mode comprises aligning NAS capability information of the UE (400) and/or the network entity (600) with another network entity, wherein the other network entity is from another network, especially a home network of the UE, wherein the other network entity is required to service the UE (400), wherein the UE (400) is associated to the other network entity, and/or wherein the other network entity comprises subscriber information related to the UE (400).

9. The method (20) of one of the claims 7 or 8, further comprising receiving from a base station (500) of the mobile communication system (700) NAS capability information and wherein the determining of the NAS mode is further based on the NAS capability information of the base station (500).

10. A method (30) for a base station (500) of a mobile communication system (700), the base station (500) supporting two or more non-access stratum, NAS, modes, the method (30) comprising
providing (31) NAS capability information of the base station (500) indicating the support of the two or more NAS modes to a core network entity (600) of the mobile communication system (700); and
receiving (32) an indication on which NAS mode to use in response to the NAS capability information from the core network entity (600).

11. The method (30) of claim 10, further comprising transmitting the NAS capability information or a further indication about the NAS mode to use to a UE (400) of the mobile communication system (700).

12. A computer program having a program code for performing one of the methods (10) for a UE (400) according to one of the claims 1 to 6, one of the methods (20) for a network entity (600) according to one of the claims 7 to 9, or one of the methods (30) for a base station (500) according to one of the claims 10 or 11, when the computer program is executed on a computer, a processor, or a programmable hardware component.

13. An apparatus (40) for a user equipment (400), UE, of a mobile communication system (700) and for supporting two or more non-access stratum, NAS, modes in a mobile communication system (700), the apparatus (40) comprises
one or more interfaces (42) configured to communicate in the mobile communication system (700); and
one or more processing devices (44) configured to perform one of the methods (10) of claims 1 to 6.

14. An apparatus (60) for a network entity (600) of a mobile communication system (700) and for supporting two or more non-access stratum, NAS, modes in a mobile communication system (700), the apparatus (60) comprises
one or more interfaces (62) configured to communicate in the mobile communication system (700); and
one or more processing devices (64) configured to perform one of the methods (20) of claims 7 to 9.

15. An apparatus (50) for a base station (500) of a mobile communication system (700) and for supporting two or more non-access stratum, NAS, modes in a mobile communication system (700), the apparatus (50) comprises
one or more interfaces (52) configured to communicate in the mobile communication system (700); and
one or more processing devices (54) configured to perform one of the methods (30) of claims 10 or 11.

## Patentansprüche

1. Ein Verfahren (10) für ein Benutzergerät (400), UE, eines Mobilkommunikationssystems (700), wobei das UE (400) zwei oder mehr Nicht-Zugriffsschicht-, NAS-, Modi unterstützt, wobei das Verfahren (10) Folgendes umfasst:
Bereitstellen (11) von NAS-Fähigkeitsinformationen, die die Unterstützung der zwei oder mehr NAS-Modi anzeigen, an eine Netzwerkentität (600) des Mobilkommunikationssystems (700); und
Empfangen (12) einer Anzeige, welcher NAS-Modus zu verwenden ist, ansprechend auf die NAS-Fähigkeitsinformationen von der Netzwerkentität (600).

2. Das Verfahren (10) nach Anspruch 1, wobei das Bereitstellen der NAS-Fähigkeitsinformationen Teil eines UE-Netzwerkregistrierungsprozesses ist.

3. Das Verfahren (10) nach einem der Ansprüche 1 oder 2, wobei die NAS-Fähigkeitsinformationen eines oder mehrere Elemente der folgenden Gruppe umfassen:
Unterstützung für den 5^{te} Generation-, 5G-, NAS-Betriebsmodus;
Unterstützung für den 6G-NAS-Betriebsmodus;
Unterstützung für den dienstbasierten NAS-Betriebsmodus;
Unterstützung für den Legacy-NAS-Betriebsmodus;
eine Präferenz für einen spezifischen Betriebsmodus;
eine Liste von bevorzugten Betriebsmodi;
Dienste/Funktionalität, für die dienstbasierte NAS unterstützt wird, insbesondere in Bezug auf Funktionalität, die durch eine Zugriffs- und Mobilitätsverwaltungsfunktion, AMF, eine Sitzungsverwaltungsfunktion, SMF, eine Richtliniensteuerfunktion, PCF, eine Kurznachrichtendienstfunktion, SMSF, und/oder eine Gateway-Mobilstandortszentrum-, GLMC-, Version oder Versionen, insbesondere Anwendungsprogrammierschnittstellen-, API-, Version(en), die unterstützt wird/werden, bereitgestellt wird.

4. Das Verfahren (10) nach einem der Ansprüche 1 bis 3, wobei das Empfangen der Anzeige ein Empfangen einer NAS-Nachricht unter Verwendung des jeweiligen NAS-Modus umfasst.

5. Das Verfahren (10) nach einem der Ansprüche 1 bis 4, wobei das Empfangen der Anzeige ein Empfangen einer NAS-Modus-Antwortanzeige oder -nachricht umfasst und ferner ein Herstellen einer NAS-Verbindung mit einer Netzwerk-NAS-Entität unter Verwendung des angezeigten NAS-Modus umfasst.

6. Das Verfahren (10) nach Anspruch 5, wobei die NAS-Modus-Antwortnachricht einen ausgewählten NAS-Betriebsmodus anzeigt, insbesondere einschließlich mindestens eines Elements der folgenden Gruppe:
eine Legacy-NAS-Anzeige;
eine dienstbasierte NAS-Anzeige; und
eine Version oder Versionen, insbesondere Anwendungsprogrammierschnittstellen-, API-, Version(en), die das Netzwerk unterstützt.

7. Ein Verfahren (20) für eine Netzwerkentität (600) eines Mobilkommunikationssystems (700), wobei das Mobilkommunikationssystem (700) konfiguriert ist, um ein Benutzergerät (400), UE, zu bedienen, das zwei oder mehr Nicht-Zugriffsschicht-, NAS-, Modi unterstützt, wobei das Verfahren (20) Folgendes umfasst:
Erhalten (21) von NAS-Fähigkeitsinformationen von dem UE (400), wobei die NAS-Fähigkeitsinformationen die Unterstützung der zwei oder mehr NAS-Modi anzeigen;
Bestimmen (22) eines NAS-Modus für das UE (400) zur Verwendung; und
Senden (23) einer Anzeige, welcher NAS-Modus zu verwenden ist, ansprechend auf die NAS-Fähigkeitsinformationen.

8. Das Verfahren (20) nach Anspruch 7, wobei das Bestimmen (22) des NAS-Modus ein Ausrichten von NAS-Fähigkeitsinformationen des UE (400) und/oder der Netzwerkentität (600) mit einer anderen Netzwerkentität umfasst, wobei die andere Netzwerkentität von einem anderen Netzwerk, insbesondere einem Heimnetzwerk des UE, ist, wobei die andere Netzwerkentität erforderlich ist, um das UE (400) zu unterhalten, wobei das UE (400) der anderen Netzwerkentität zugeordnet ist, und/oder wobei die andere Netzwerkentität Teilnehmerinformationen in Bezug auf das UE (400) umfasst.

9. Das Verfahren (20) nach einem der Ansprüche 7 oder 8, ferner umfassend ein Empfangen von NAS-Fähigkeitsinformationen von einer Basisstation (500) des Mobilkommunikationssystems (700), und wobei das Bestimmen des NAS-Modus ferner auf den NAS-Fähigkeitsinformationen der Basisstation (500) basiert.

10. Ein Verfahren (30) für eine Basisstation (500) eines Mobilkommunikationssystems (700), wobei die Basisstation (500) zwei oder mehr Nicht-Zugriffsschicht-, NAS-, Modi unterstützt, wobei das Verfahren (30) Folgendes umfasst:
Bereitstellen (31) von NAS-Fähigkeitsinformationen der Basisstation (500), die die Unterstützung der zwei oder mehr NAS-Modi anzeigen, an eine Kernnetzwerkentität (600) des Mobilkommunikationssystems (700); und
Empfangen (32) einer Anzeige, welcher NAS-Modus zu verwenden ist, ansprechend auf die NAS-Fähigkeitsinformationen von der Kernnetzwerkentität (600).

11. Das Verfahren (30) nach Anspruch 10, ferner umfassend ein Senden der NAS-Fähigkeitsinformationen oder einer weiteren Anzeige, welcher NAS-Modus zu verwenden ist, an ein UE (400) des Mobilkommunikationssystems (700).

12. Ein Computerprogramm mit einem Programmcode zum Durchführen eines der Verfahren (10) für ein UE (400) nach einem der Ansprüche 1 bis 6, eines der Verfahren (20) für eine Netzwerkentität (600) nach einem der Ansprüche 7 bis 9 oder eines der Verfahren (30) für eine Basisstation (500) nach einem der Ansprüche 10 oder 11, wenn das Computerprogramm auf einem Computer, einem Prozessor oder einer programmierbaren Hardwarekomponente ausgeführt wird.

13. Eine Vorrichtung (40) für ein Benutzergerät (400), UE, eines Mobilkommunikationssystems (700) und zum Unterstützen von zwei oder mehr Nicht-Zugriffsschicht-, NAS-, Modi in einem Mobilkommunikationssystem (700), wobei die Vorrichtung (40) Folgendes umfasst:
eine oder mehrere Schnittstellen (42), die konfiguriert sind, um in dem Mobilkommunikationssystem (700) zu kommunizieren; und
eine oder mehrere Verarbeitungsvorrichtungen (44), die konfiguriert sind, um eines der Verfahren (10) nach den Ansprüchen 1 bis 6 durchzuführen.

14. Eine Vorrichtung (60) für eine Netzwerkentität (600) eines Mobilkommunikationssystems (700) und zum Unterstützen von zwei oder mehr Nicht-Zugriffsschicht-, NAS-, Modi in einem Mobilkommunikationssystem (700), wobei die Vorrichtung (60) Folgendes umfasst:
eine oder mehrere Schnittstellen (62), die konfiguriert sind, um in dem Mobilkommunikationssystem (700) zu kommunizieren; und
eine oder mehrere Verarbeitungsvorrichtungen (64), die konfiguriert sind, um eines der Verfahren (20) nach den Ansprüchen 7 bis 9 durchzuführen.

15. Eine Vorrichtung (50) für eine Basisstation (500) eines Mobilkommunikationssystems (700) und zum Unterstützen von zwei oder mehr Nicht-Zugriffsschicht-, NAS-, Modi in einem Mobilkommunikationssystem (700), wobei die Vorrichtung (50) Folgendes umfasst:
eine oder mehrere Schnittstellen (52), die konfiguriert sind, um in dem Mobilkommunikationssystem (700) zu kommunizieren; und
eine oder mehrere Verarbeitungsvorrichtungen (54), die konfiguriert sind, um eines der Verfahren (30) nach den Ansprüchen 10 oder 11 durchzuführen.

## Revendications

1. Procédé (10) pour un équipement utilisateur (400), UE, d'un système de communication mobile (700), l'UE (400) supportant deux modes de strate de non-accès, NAS, ou plus, le procédé (10) comprenant le fait de
fournir (11) des informations de capacité NAS indiquant le support des deux modes NAS ou plus, à une entité de réseau (600) du système de communication mobile (700) ; et
recevoir (12) une indication sur quel mode NAS à utiliser en réponse aux informations de capacité NAS en provenance de l'entité de réseau (600).

2. Procédé (10) selon la revendication 1, dans lequel le fait de fournir les informations de capacité NAS fait partie d'un processus d'enregistrement de réseau d'UE.

3. Procédé (10) selon l'une des revendications 1 ou 2, dans lequel les informations de capacité NAS comprennent un ou plusieurs éléments du groupe de
support pour un mode de fonctionnement NAS de 5^{ème} génération, 5G ;
support pour un mode de fonctionnement NAS 6G ;
support pour un mode de fonctionnement NAS basé sur un service ;
support pour un mode de fonctionnement NAS hérité ;
une préférence pour un mode de fonctionnement spécifique ;
une liste de modes de fonctionnement préférés ;
des services/fonctionnalités, pour lesquels un NAS basé sur un service est supporté, en particulier liés à une fonctionnalité fournie par une fonction de gestion d'accès et de mobilité, AMF, une fonction de gestion de session, SMF, une fonction de commande de politiques, PCF, une fonction de service de messages courts, SMSF et/ou une ou des versions de centre de localisation mobile de passerelle, GLMC, en particulier une ou des versions d'interfaces de programmation d'application, API, supportées.

4. Procédé (10) selon l'une des revendications 1 à 3, dans lequel le fait de recevoir l'indication comprend le fait de recevoir un message NAS en utilisant le mode NAS respectif.

5. Procédé (10) selon l'une des revendications 1 à 4, dans lequel le fait de recevoir l'indication comprend le fait de recevoir une indication ou un message de réponse de mode NAS et comprenant en outre le fait d'établir une connexion NAS avec une entité NAS de réseau en utilisant le mode NAS indiqué.

6. Procédé (10) selon la revendication 5, dans lequel le message de réponse de mode NAS indique un mode de fonctionnement NAS choisi, incluant en particulier au moins un élément du groupe de
une indication NAS héritée ;
une indication NAS basée sur un service ; et
une ou des versions, en particulier une ou des versions d'interfaces de programmation d'application, API, supportées par le réseau.

7. Procédé (20) pour une entité de réseau (600) d'un système de communication mobile (700), le système de communication mobile (700) étant configuré pour desservir un équipement utilisateur (400), UE, supportant deux modes de strate de non-accès, NAS, ou plus, le procédé (20) comprenant le fait de
obtenir (21) des informations de capacité NAS à partir de l'UE (400), les informations de capacité NAS indiquant le support des deux modes NAS ou plus ;
déterminer (22) un mode NAS à utiliser par l'UE (400) ; et
transmettre (23) une indication sur le mode NAS à utiliser en réponse aux informations de capacité NAS.

8. Procédé (20) selon la revendication 7, dans lequel le fait de déterminer (22) le mode NAS comprend le fait d'aligner des informations de capacité NAS de l'UE (400) et/ou de l'entité de réseau (600) avec une autre entité de réseau, dans lequel l'autre entité de réseau provient d'un autre réseau, en particulier d'un réseau domestique de l'UE, dans lequel l'autre entité de réseau est requise pour desservir l'UE (400), dans lequel l'UE (400) est associé à l'autre entité de réseau, et/ou dans lequel l'autre entité de réseau comprend des informations d'abonné relatives à l'UE (400).

9. Procédé (20) selon l'une des revendications 7 ou 8, comprenant en outre le fait de recevoir à partir d'une station de base (500) du système de communication mobile (700) des informations de capacité NAS et dans lequel le fait de déterminer le mode NAS est en outre basé sur les informations de capacité NAS de la station de base (500).

10. Procédé (30) pour une station de base (500) d'un système de communication mobile (700), la station de base (500) supportant deux modes de strate de non-accès, NAS, ou plus, le procédé (30) comprenant le fait de
fournir (31) des informations de capacité NAS de la station de base (500) indiquant le support des deux modes NAS ou plus à une entité de réseau central (600) du système de communication mobile (700) ; et
recevoir (32) une indication sur quel mode NAS à utiliser en réponse aux informations de capacité NAS en provenance de l'entité de réseau central (600).

11. Procédé (30) selon la revendication 10, comprenant en outre le fait de transmettre les informations de capacité NAS ou une indication supplémentaire concernant le mode NAS à utiliser à un UE (400) du système de communication mobile (700).

12. Programme informatique ayant un code de programme pour réaliser l'un des procédés (10) pour un UE (400) selon l'une des revendications 1 à 6, l'un des procédés (20) pour une entité de réseau (600) selon l'une des revendications 7 à 9, ou l'un des procédés (30) pour une station de base (500) selon l'une des revendications 10 ou 11, lorsque le programme informatique est exécuté sur un ordinateur, un processeur, ou un composant matériel programmable.

13. Appareil (40) pour un équipement utilisateur (400), UE, d'un système de communication mobile (700) et pour supporter deux modes de strate de non-accès, NAS, ou plus dans un système de communication mobile (700), l'appareil (40) comprenant
une ou plusieurs interfaces (42) configurées pour communiquer dans le système de communication mobile (700) ; et
un ou plusieurs dispositifs de traitement (44) configurés pour réaliser l'un des procédés (10) des revendications 1 à 6.

14. Appareil (60) pour une entité de réseau (600) d'un système de communication mobile (700) et pour supporter deux modes de strate de non-accès, NAS, ou plus dans un système de communication mobile (700), l'appareil (60) comprenant
une ou plusieurs interfaces (62) configurées pour communiquer dans le système de communication mobile (700) ; et
un ou plusieurs dispositifs de traitement (64) configurés pour réaliser l'un des procédés (20) des revendications 7 à 9.

15. Appareil (50) pour une station de base (500) d'un système de communication mobile (700) et pour supporter deux modes de strate de non-accès, NAS, ou plus dans un système de communication mobile (700), l'appareil (50) comprenant
une ou plusieurs interfaces (52) configurées pour communiquer dans le système de communication mobile (700) ; et
un ou plusieurs dispositifs de traitement (54) configurés pour réaliser l'un des procédés (30) des revendications 10 ou 11.
